# EUROPÄISCHE PATENTSCHRIFT

(11) **EP 3 944 409 B1**
(45) Veröffentlichungstag und Bekanntmachung des Hinweises auf die Patenterteilung: **27.09.2023**
(21) Anmeldenummer: 20187545.7
(22) Anmeldetag: 23.07.2020
(51) Int. Cl.: H01M 50/609

(54) **BEFÜLLVORRICHTUNG ZUM BEFÜLLEN EINER BATTERIE SOWIE VERFAHREN ZUM BEFÜLLEN EINER BATTERIE**
FILLING DEVICE FOR FILLING A BATTERY AND METHOD FOR FILLING A BATTERY
DISPOSITIF DE REMPLISSAGE POUR REMPLIR UNE BATTERIE ET PROCÉDÉ DE REMPLISSAGE D'UNE BATTERIE

(43) Veröffentlichungstag der Anmeldung: 26.01.2022
(73) Patentinhaber: VAF GmbH, 73441 Bopfingen (DE)
(72) Erfinder: Braun, Thomas, 73469 Riesbürg (DE); Huber, Tobias, 86655 Harburg (DE); Uhl, Rudolf, 73450 Neresheim (DE); Brenner, Franziska, 73469 Riesbürg (DE)
(74) Vertreter: Schorr, Peter Karl

(56) Entgegenhaltungen:
- EP-A1- 2 521 208
- WO-A1-2009/117809
- KR-A- 20090 036 792

## Beschreibung

Die Erfindung betrifft eine Befüllvorrichtung zum Befüllen einer Batterie mit mindestens einem Halterahmen, der mindestens eine Grundplatte, der mindestens eine in oder an der Grundplatte angeordnete Aufnahme und der mindestens eine zur Grundplatte beabstandete Tragstruktur aufweist, mit mindestens einem Batteriegehäuse, das in oder an mindestens einer der mindestens einen Aufnahme anordenbar oder angeordnet ist und das mindestens einen Befüllabschnitt umfasst, durch den ein Fluid, insbesondere ein Elektrolyt, einem Hohlraum des Batteriegehäuses zuführbar ist, mit mindestens einem hülsenartigen Befüllkörper, dem das Fluid zum Befüllen des Batteriegehäuses zuführbar ist und der zumindest beim Anordnen in einer Befüllanordnung mittels eines Koppelabschnitts mit dem Befüllabschnitt des Batteriegehäuses zum Herstellen einer Fluidverbindung entlang einer Fügerichtung koppelbar ist und mit mindestens einem Spannmittel, durch das das Batteriegehäuse und der Befüllkörper in Richtung aufeinander zu spannbar sind, wobei mindestens eines des mindestens einen Spannmittels in der oder an der Aufnahme der Grundplatte angeordnet ist sowie ein Verfahren zum Befüllen einer Batterie.

Befüllvorrichtungen zum Befüllen von Batterien sind in unterschiedlichen Ausführungsformen aus dem Stand der Technik bekannt. Hierbei werden Batteriegehäuse in einen Halterahmen eingesetzt und das Batteriegehäuse mit einem Fluid, insbesondere einem Elektrolyt, befüllt.

In den Batteriegehäusen können jeweils zusätzlich zum Fluid so genannte Jelly-Rolls angeordnet werden, in die das Fluid, insbesondere das Elektrolyt, aufsaugbar ist. Hierdurch ist ein sofortiges Befüllen des Batteriegehäuses erschwert, da das Fluid die Jelly-Roll zeitverzögert durchdrängt. Um den aktiven Befüllvorgang durch eine Dosiereinheit zeitlich effizient zu halten und um eine zumindest nahezu vollständige Befüllung des Batteriegehäuses mit Fluid zu erzielen, ist es aus dem Stand der Technik bekannt, so genannte Befüllkörper zu verwenden, die trichterartig an den Batteriegehäusen angeordnet sind und in denen das Fluid, das dem Batteriegehäuse zugeführt werden soll, angeordnet wird. Hierdurch kann das Fluid über den maximal möglichen Füllstand des Batteriegehäuses eingefüllt werden, wobei Restfluid im Befüllkörper verbleibt. Beim zunehmenden Durchtränken der Jelly-Roll fließt dieses Restfluid in das frei werdende Volumen im Batteriegehäuse nach.

Um einen festen Sitz des Befüllkörpers an dem Batteriegehäuse zu gewährleisten, ist aus dem Stand der Technik bekannt, eine Tragstruktur vorzusehen, die den Befüllkörper stützt. An der Tragstruktur ist ein Spannmittel angeordnet, durch das der Befüllkörper gegenüber der Tragstruktur abgestützt ist und in Richtung auf das Batteriegehäuse gespannt ist.

Eine gattungsgemäße Befüllvorrichtung ist bekannt aus KR 2009 0036792 A.

Eine Aufgabe eines Ausführungsbeispiels der Erfindung ist, eine alternative zweckmäßige Bauform vorzuschlagen.

Diese Aufgabe wird gelöst durch eine eingangs genannte Befüllvorrichtung zum Befüllen einer Batterie, bei der die Befüllvorrichtung mindestens ein Stützmittel umfasst, das lösbar oder unlösbar zwischen Grundplatte und Tragstruktur anordenbar ist, das gitterartig zur Grundplatte beabstandet und parallel zu dieser verlaufend angeordnet ist und durch das das Batteriegehäuse zumindest gegen ein Bewegen quer zur Fügerichtung abstützbar ist.

Dadurch, dass das mindestens eine Spannmittel in der oder an der Aufnahme des Grundträgers angeordnet ist, ist eine alternative zweckmäßige Bauform zur Verfügung gestellt. Darüber hinaus ist solchenfalls ein zwischen Befüllkörper und Tragstruktur bestehendes Spiel reduzierbar.

Grundsätzlich ist es denkbar, dass die Grundplatte und die Tragstruktur des Halterahmens ein gemeinsames, einstückiges Bauteil bilden. Es erweist sich jedoch als vorteilhaft, wenn Grundplatte und Tragstruktur voneinander separierbare und in Fügerichtung aneinander lösbar fügbare Bauteile umfassen.

Bei dem Fluid kann es sich um ein beliebiges Fluid handeln, das für einen Einsatz in Batterien Anwendung finden kann. Insbesondere kann das Fluid ein Elektrolyt umfassen.

Durch das Stützmittel kann vermieden werden, dass beim Fügen der Tragstruktur an der Grundplatte, insbesondere beim berührenden Anlegen des Stützkörpers auf das Batteriegehäuse, das Batteriegehäuse quer oder schräg zur Fügerichtung ausweichen kann.

Das Stützmittel kann flächenhaft zur Grundplatte beabstandet und parallel zu dieser verlaufend angeordnet sein.

Stützmittel und Grundplatte können ein einstückiges gemeinsames Bauteil umfassen oder aus voneinander separaten oder separierbaren Bauteilen gebildet und miteinander gefügt sein.

Die Aufnahme kann grundsätzlich beliebig gebildet sein, sofern sie der Funktion nachkommt, das Batteriegehäuse an der Grundplatte festlegen zu können. Die Befüllvorrichtung lässt sich bauteilreduziert ausbilden, wenn mindestens eine der mindestens einen Aufnahme durch eine Aussparung in der Grundplatte gebildet ist, die insbesondere einen Querschnitt umfasst, der korrespondierend, insbesondere komplementär, zum Querschnitt des Batteriegehäuses ausgebildet ist, und/oder wenn mindestens eines des mindestens einen Spannmittels zwischen der Grundplatte und dem Batteriegehäuse abgestützt ist.

Dadurch, dass die Aussparung in der Grundplatte einen Querschnitt umfasst, der korrespondierend, insbesondere komplementär, zum Querschnitt des Batteriegehäuses ausgebildet ist, ist ein fester Sitz des Batteriegehäuses an der Grundplatte gewährleistbar. Dadurch, dass die Aufnahme eine Aussparung in der Grundplatte umfasst, können Grundplatte und Aufnahme ein gemeinsames Bauteil umfassen.

Um zu verhindern, dass Fluid, das im Befüllkörper angeordnet ist und in Richtung Batteriegehäuse fliest, beim Übergang vom Befüllkörper auf das Batteriegehäuse, zumindest teilweise ungewollt entweichen kann, ist bei einer Ausführungsform der Befüllvorrichtung mindestens ein Dichtmittel vorgesehen, das zumindest in der Befüllanordnung zwischen Befüllabschnitt des Batteriegehäuses und Koppelabschnitts des Befüllkörpers anordenbar oder angeordnet ist.

Das Dichtmittel kann zwischen Füllkörper und Befüllabschnitt in Gänze oder nur abschnittsweise die gesamte Anlagefläche umgebend angeordnet sein.

Es erweisen sich Weiterbildungen letztgenannter Ausführungsformen als vorteilhaft, bei denen der Befüllabschnitt des Batteriegehäuses und der Koppelabschnitt des Befüllkörpers in der Befüllanordnung bezüglich der Fügerichtung stirnseitig aneinander anliegen, wobei mindestens eines des mindestens einen Dichtmittels zwischen den Stirnseiten des Befüllabschnitts des Batteriegehäuses und des Koppelabschnitt des Befüllkörpers angeordnet ist und/oder bei denen der Befüllabschnitt des Batteriegehäuses und der Koppelabschnitt des Befüllkörpers in der Befüllanordnung bezüglich der Fügerichtung umfangsseitig aneinander anliegen, wobei mindestens eines des mindestens einen Dichtmittels zwischen den Umfangsseiten des Befüllabschnitts des Batteriegehäuses und des Koppelabschnitt des Befüllkörpers angeordnet ist.

Solchenfalls sind Weiterbildungen denkbar, bei denen Befüllkörper und Batteriegehäuse auf Stoß aneinander angrenzend aneinander anliegen und/oder bei denen das Batteriegehäuse und Füllkörper zumindest abschnittsweise einander überlappend angeordnet sind. Solchenfalls kann mindestens eines des mindestens einen Dichtmittels an den Stirnflächen, die aneinander anliegend angrenzend angeordnet sind oder an den Überlappungsabschnitten angeordnet seien.

Ferner können bei Ausführungsbeispielen der Befüllvorrichtung mindestens ein Wickelkörper vorgesehen sein, der im Hohlraum des Batteriegehäuses anordenbar oder angeordnet ist und der zumindest teilweise mit dem Fluid durchtränkbar ist.

Bei dem Wickelkörper kann es sich um eine so genannte "Jelly-Roll" handeln. Solchenfalls kann der Wickelkörper ein Wickelmaterial umfassen, das abschnittsweise eine positive Elektrode und eine negative Elektrode sowie zwischen den einzelnen Elektroden angeordnete elektrisch neutrale Separatoren umfassen kann.

Dadurch, dass der Wickelkörper durch das Fluid, insbesondere durch das Elektrolyt, durchtränkbar ist, saugt sich der Wickelkörper beim Befüllen des Batteriegehäuses zunehmend mit Fluid voll, bis eine maximale Sättigung des Wickelkörpers erreicht ist.

Um ein Festlegen des Befüllkörpers an dem Batteriegehäuse in der gefügten Anordnung zu verbessern, erweist es sich als vorteilhaft, wenn die Befüllvorrichtung mindestens eine Festlegeeinheit aufweist, durch die der Befüllkörper in der Befüllanordnung relativ zur Tragstruktur unbeweglich und/oder ortsfest festlegbar ist.

Durch das Vorsehen mindestens einer Festlegeeinheit können ein oder mehrere Befüllkörper an der Tragstruktur vor dem Fügen der Tragstruktur an der Grundplatte festgelegt werden. Hierdurch ist die Befüllvorrichtung vormontierbar und die spätere Endmontage erleichtert.

Die Festlegeeinheit kann grundsätzlich beliebig ausgebildet sein, sofern sie der technischen Funktion nachkommt, den mindestens einen Befüllkörper an der Tragstruktur festzulegen. Bei einer Ausführungsform der Befüllvorrichtung ist vorgesehen, dass die Festlegeeinheit mindestens einen quer oder schräg zur Fügerichtung erstreckten, insbesondere umlaufenden, Vorsprung an der Mantelfläche des Befüllkörpers und/oder mindestens einen hakenförmigen Halter an der Tragstruktur umfasst, wobei Vorsprung und Halter bezüglich der Fügerichtung einen Hintergriff bilden.

Hierdurch ist auf einfache Weise ein Anschlag bezüglich der Fügerichtung ausbildbar, so dass der Befüllkörper in einer gefügten Anordnung weder in Fügerichtung noch entgegen der Fügerichtung bewegbar ist. Hierdurch kann die Gefahr eines ungewollten Entweichens von Fluid beim Fließen von Fluid vom Befüllkörper in Richtung auf das Batteriegehäuse weiter reduziert werden.

Es sind Ausführungsformen denkbar, bei denen die Tragstruktur und die Grundplatte ein einstückiges gemeinsames Bauteil umfassen. Darüber hinaus können Tragstruktur und Grundplatte als separate und voneinander separierbare Bauteile ausgebildet sein. Bei einer Ausführungsform der Befüllvorrichtung ist vorgesehen, dass die Tragstruktur in Fügerichtung an der Grundplatte anordenbar und lösbar an der Grundplatte festlegbar ist.

Grundsätzlich ist es denkbar, dass an dem Halterahmen lediglich ein einzelnes Batteriegehäuse und ein einzelner Befüllkörper anordenbar, bzw. festlegbar ist. Um ein Befüllen von mehreren Batteriegehäusen effizient zu gestalten, sind Ausführungsformen der Befüllvorrichtung denkbar, bei denen der Halterahmen eine Grundplatte und eine Mehrzahl von an der Grundplatte an geordnete Aufnahmen für eine Mehrzahl von Batteriegehäusen, aufweist, und/oder bei denen an der Tragstruktur eine Mehrzahl von Befüllkörpern durch eine Mehrzahl von Festlegeeinheiten festlegbar ist.

Solchenfalls sind mehrere Aufnahmen in der Grundplatte anordenbar. Diese können dort in mehreren Reihen und Spalten angeordnet sein. Dieses gilt in gleicher Weise für die Tragstruktur, die mit ihren Festlegeeinheiten bezüglich der Anordnung derselben, korrespondierend, insbesondere komplementär zu der Anordnung der Aufnahmen in der Grundplatte ausbildbar sind.

Um das Befüllen der Batteriegehäuse mit Fluid zu erleichtern, umfasst ein Ausführungsbeispiel der Befüllvorrichtung mindestens eine Druckkammer, die einen Druckraum umfasst, in dem der Halterahmen anordenbar ist und in dem bezüglich einer Umgebung außerhalb der Druckkammer ein Über- oder Unterdruck einstellbar ist.

Dadurch, dass der Halterahmen in der Druckkammer anordenbar ist und das in der Druckkammer bezüglich der Umgebung ein Unterdruck einstellbar ist, kann das Batteriegehäuse vor dem Befüllen mit Fluid zumindest teilweise evakuiert werden, wodurch ein Befüllen mit Fluid erleichtert ist.

Bei einer Weiterbildung letztgenannter Ausführungsform ist vorgesehen, dass die Druckkammer eine Arbeitsplatte und einen relativ zur Arbeitsplatte bewegbaren Glockenkörper umfasst, wobei der Glockenkörper von einer Freigabeposition, in der der zur Arbeitsplatte beabstandet ist, in eine Arbeitsposition überführbar ist, in der der Glockenkörper an der Arbeitsplatte flächenhaft anliegt und der Druckraum abschnittsweise oder in Gänze durch Arbeitsplatte und Glockenkörper umgeben ist.

Dadurch, dass die Druckkammer eine Arbeitsplatte und an einen relativ zur Arbeitsplatte bewegbaren Glockenkörper umfasst, ist der Halterahmen auf einfache Weise auf der Arbeitsplatte anordenbar.

Ferner kann mindestens ein Dichtelement vorgesehen sein, das zwischen dem Glockenkörper und Arbeitsplatte anordenbar ist und durch das ein beim Anordnen des Glockenkörpers auf der Arbeitsplatte möglicherweise vorhandener Spalt abdichtbar ist.

Um auf einfache Weise einen Überdruck oder Unterdruck im Druckraum der Druckkammer erzeugen zu können, kann die Befüllvorrichtung mindestens ein Druckaufbaumittel umfassen, durch das ein Druck, insbesondere Überdruck oder Unterdruck, in den Druckraum oder der Druckkammer einstellbar ist.

Ferner kann es sich als vorteilhaft erweisen, wenn in dem Druckraum der Druckkammer ein Arbeitsgas angeordnet ist. Solchenfalls kann die Befüllvorrichtung mindestens ein Fluidzuführmittel umfassen, durch das ein Fluid, insbesondere ein Edelgas, dem Druckraum der Druckkammer zuführbar ist.

Um ein Befüllen der Batteriegehäuse zu ermöglichen, erweist es sich als vorteilhaft, wenn die Befüllvorrichtung mindestens eine Dosiereinheit umfasst, in der das Fluid zum Befüllen des Batteriegehäuses förderbar ist und durch die mindestens einen Befüllkörper Fluid zum Befüllen eines Batteriegehäuses zuführbar ist.

Wenn der Halterahmen mehrere Aufnahmen umfasst, in denen mehrere Batteriegehäuse anordenbar sind, erweist es sich als vorteilhaft, wenn die Befüllvorrichtung mindestens ein in der Druckkammer angeordnetes Fördermittel umfasst, durch das der Halterahmen relativ zur Dosiereinheit oder die Dosiereinheit relativ zum Halterahmen bewegbar ist. Solchenfalls können mit ein und derselben Dosiereinheit mehrere Batteriegehäuse mit Fluid befüllt werden.

Das Fördermittel kann beispielsweise einen Linearantrieb umfassen.

Darüber hinaus wird die Aufgabe gelöst durch ein Verfahren zum Befüllen einer Batterie, mittels eine Befüllvorrichtung, mit mindestens einem der zuvor genannten Merkmale, mit den Schritten:
a. Anordnen mindestens eines Batteriegehäuses in einer Aufnahme einer Grundplatte eines Halterahmens der Befüllvorrichtung;
b. Anordnen mindestens eines Befüllkörpers an einer Tragstruktur des Halterahmens der Befüllvorrichtung und beabstandetes Anordnen der Tragstruktur an der Grundplatte in einer Befüllanordnung, derart, dass mindestens einer des mindestens einen Befüllkörpers mittels eines Koppelabschnitts mit einem Befüllabschnitt mindestens eines Batteriegehäuses zum Herstellen einer Fluidverbindung entlang einer Fügerichtung koppelbar ist;
c. Anordnen des Systems aus Halterahmen, mindestens einem Batteriegehäuses und mindestens einem Befüllkörpers auf einer Arbeitsplatte einer Druckkammer der Befüllvorrichtung und Absenken eines Glockenkörpers der Befüllvorrichtung auf die Arbeitsplatte zum Bilden eines Druckraums;
d. Erzeugen eines Unterdrucks im Druckraum durch mindestens ein Druckaufbaumittel und/oder Zuführen eines Fluids, insbesondere Edelgas, in den Druckraum durch mindestens ein Fluidzuführm ittel;
e. Befüllen des Befüllkörpers mit einem Fluid, insbesondere Elektrolyt, durch eine Dosiereinheit.

Weitere Merkmale, Einzelheiten und Vorteile der Erfindung ergeben sich aus den beigefügten Patentansprüchen, aus der zeichnerischen Darstellung und nachfolgenden Beschreibung bevorzugter Ausführungsformen der Befüllvorrichtung sowie des Verfahrens.

In der Zeichnung zeigt:
- Figur 1: Eine geschnittene Vorderansicht auf ein erstes Ausführungsbeispiel einer Befüllvorrichtung;
- Figur 2: Eine geschnittene Vorderansicht auf ein zweites Ausführungsbeispiel der Befüllvorrichtung;
- Figuren 3a - 3d: Geschnittene, schematische Vorderansichten auf jeweils am Batteriegehäuse angeordnete Befüllkörper mit Dichmittel;
- Figur 4: Ein schematisches Ablaufdiagramm des erfindungsgemäßen Verfahrens.

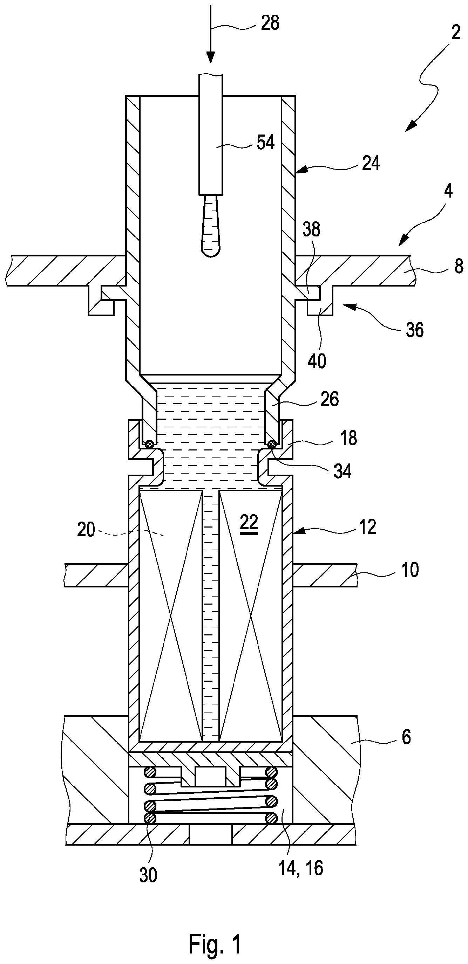

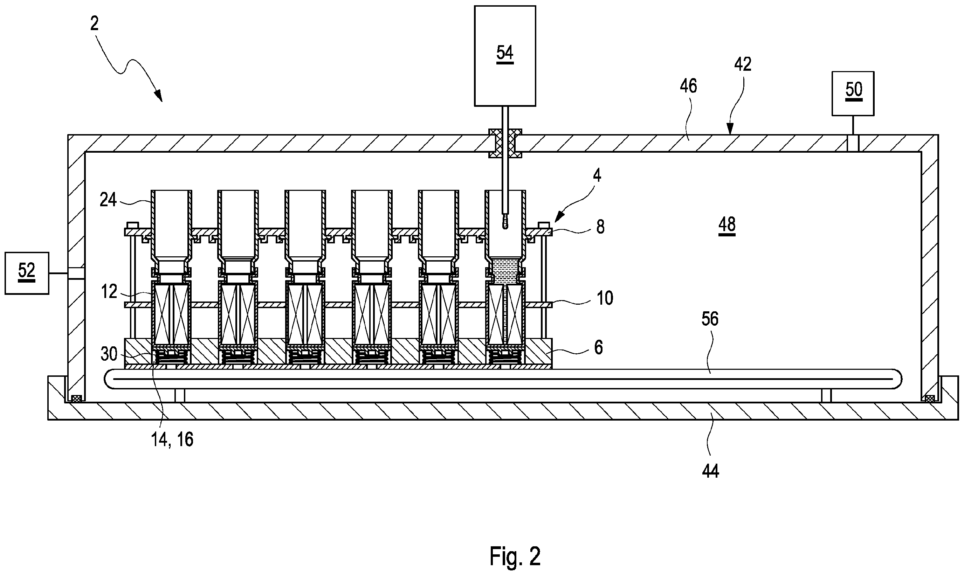

Die Figuren 1 und 2 zeigen jeweils Ausführungsbeispiele einer insgesamt mit dem Bezugszeichen 2 versehenen Befüllvorrichtung zum Befüllen einer Batterie. Die Befüllvorrichtung 2 umfasst einen Halterahmen 4, der eine Grundplatte 6 und eine zur Grundplatte 6 beabstandete Tragstruktur 8 aufweist. Bei dem in den Figuren 1 und 2 gezeigten Ausführungsbeispielen umfasst der Halterahmen 4 zusätzlich ein Stützmittel 10, das lösbar zwischen Grundplatte 6 und Tragstruktur 8 angeordnet ist.

Darüber hinaus umfasst die Befüllvorrichtung 2 Batteriegehäuse 12, das, bzw. die in oder an mindestens einer Aufnahme 14 angeordnet sind. Bei dem in den Figuren 1 und 2 gezeigten Ausführungsbeispiel ist die Aufnahme 14 durch eine Aussparung 16 in der Grundplatte 6 gebildet.

Das Batteriegehäuse 12 umfasst jeweils einen Befüllabschnitt 18, durch den ein Fluid, insbesondere ein Elektrolyt, einem Hohlraum 20 des Batteriegehäuses 12 zuführbar ist. Bei den in den Figuren 1 und 2 gezeigten Ausführungsbeispielen ist im Hohlraum 20 des Batteriegehäuses 12 zusätzlich noch ein Wickelkörper 22 angeordnet. Der Wickelkörper 22 kann eine so genannte "Jelly-Roll" umfassen und ist zumindest teilweise mit dem Fluid durchtränkbar.

Zum Befüllen des Batteriegehäuses 12 umfasst die Befüllvorrichtung 2 Befüllkörper 24, dem, bzw. denen Fluid zum Befüllen des Batteriegehäuses 12 zuführbar ist. Die Befüllkörper 24 sind hülsenartig ausgebildet und bei dem in den Figuren 1 und 2 dargestellten Ausführungsbeispiel auf der den Batteriegehäuse 12 abgewandten Seite offen ausgebildet. Durch die offene Seite ist dem Befüllkörper 24 Fluid zuführbar. Auf der dem Batteriegehäuse 12 zugewandten Seite umfasst der Befüllkörper 24 einen Koppelabschnitt 26, mit dem der Befüllkörper 24 in einer Befüllanordnung mit dem Befüllabschnitt 18 des Batteriegehäuses 12 koppelbar ist. Der Befüllkörper 24 ist gemeinsam mit der Tragstruktur 8, an dem der Befüllkörper 24 festgelegt ist, entlang einer Fügerichtung 28 mit der Grundplatte 6, bzw. dem Batteriegehäuse 12 koppelbar.

Um einen festen Sitz des Befüllkörpers 24 auf dem Batteriegehäuse 12 zu gewährleisten, umfasst die Befüllvorrichtung 2 Spannmittel 30, durch das, bzw. durch die das Batteriegehäuse 12 und der Befüllkörper 24 in Richtung aufeinander zu spannbar sind. Die Spannmittel 30 sind in der oder an der als Aussparung 16 ausgebildeten Aufnahme 32 derart angeordnet, dass das Batteriegehäuse 12 gegenüber der Grundplatte 6 abgestützt ist.

Die als Aussparung 16 ausgebildete Aufnahme 32 umfasst einen Querschnitt, der korrespondierend, insbesondere komplementär, zum Querschnitt des Batteriegehäuses 12 ausgebildet ist.

Um ein ungewolltes Entweichen von Fluid beim Befüllen des Befüllkörpers 24 beim Weiterfließen in das Batteriegehäuse 12 zu verhindern, umfasst die Befüllvorrichtung 2 jeweils ein Dichtmittel 34, das zwischen den Umfangseiten des Befüllabschnitts 18 des Batteriegehäuses 12 und des Koppelabschnitts 26 des Befüllkörpers 24 angeordnet ist.

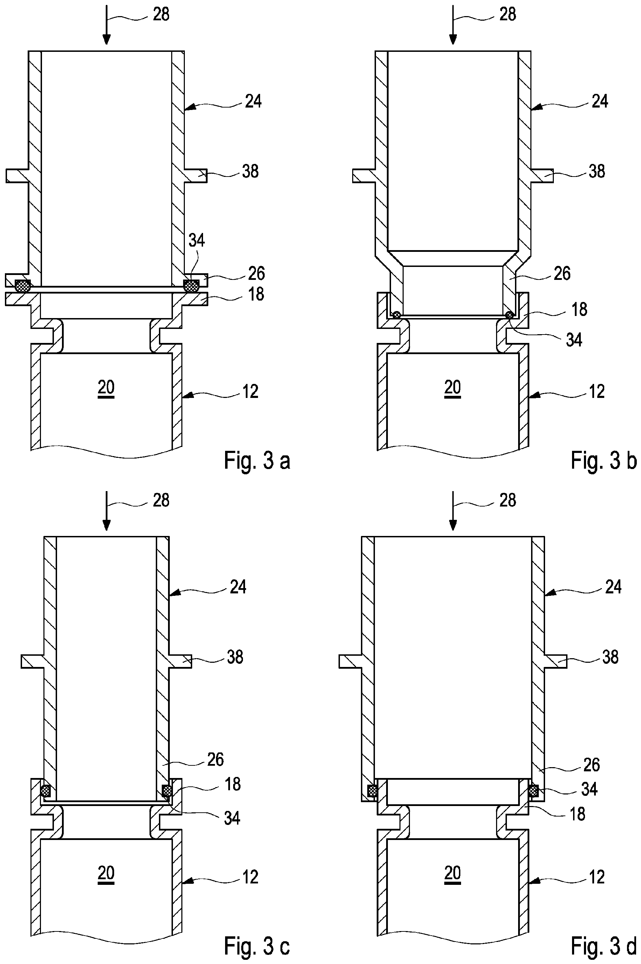

Die Figuren 3a bis 3d zeigen unterschiedliche Möglichkeiten der Anordnung des Dichtmittels 34 und der Ausgestaltung des Befüllabschnitts 18 des Batteriegehäuses 12 sowie des Koppelabschnitts 26 des Befüllkörpers 24. Die Figuren 3a und 3b zeigen Ausführungsformen, bei denen Batteriegehäuse 12 und Befüllkörper 24 an ihren Stirnflächen einander berührend aneinander anliegen. An dieser Berührfläche ist solchenfalls das Dichtmittel 34 angeordnet.

Figur 3b zeigt ein Ausführungsbeispiel, bei denen Koppelabschnitt 26 des Befüllkörpers 24 und Befüllabschnitt 18 des Batteriegehäuses 12 einander abschnittsweise überlappen. Solchenfalls kann das Dichtmittel 34 an einer quer zur Fügerichtung 28 verlaufenden Stirnfläche angeordnet sein.

Eine ähnliche Kontur aus mit Dichtmittel an einer bezüglich der Fügerichtung 28 umlaufend verlaufenden Außenfläche zeigt Figur 3c.

Figur 3d zeigt ein Ausführungsbeispiel, bei dem der Koppelabschnitt 26 des Befüllkörpers 24 den Befüllabschnitt 18 des Batteriegehäuses 12 von außen überfängt. Solchenfalls ist das Dichtmittel 34 an einer bezüglich der Fügerichtung 28 verlaufenden Umfangsfläche beider Teile anordenbar.

Um den Befüllkörper 24 an der Tragstruktur 8 anzuordnen, umfasst die Befüllvorrichtung 2 mindestens eine Festlegeeinheit 36, durch die der Befüllkörper 24 in der Befüllanordnung relativ zur Tragstruktur 8 unbeweglich und ortsfest festlegbar ist. Aus Figur 1 ist ein Ausführungsbeispiel ersichtlich, bei dem die Festlegeeinheit 36 einen quer zur Fügerichtung 28 erstreckten Vorsprung 38 an der Mantelfläche des Befüllkörpers 24 umfasst sowie einen hakenförmigen Halter 40 an der Tragstruktur 8. Vorsprung 38 und Halter 40 bilden bezüglich der Fügerichtung 28 einen Hintergriff.

Figur 2 zeigt ein Ausführungsbeispiel der Befüllvorrichtung 2, bei der die Befüllvorrichtung 2 eine Druckkammer 42 umfasst. Die Druckkammer 42 umfasst eine Arbeitsplatte 44 sowie einen Glockenkörper 46, der lösbar von einer zur Arbeitsplatte 44 beabstandeten Position in eine Arbeitsposition überführbar ist, in der der Glockenkörper 46 an der Arbeitsplatte 44 anliegt. In der Arbeitsposition umschließen Arbeitsplatte 44 und Glockenkörper 46 einen Druckraum 48. Um einen Überdruck oder einen Unterdruck im Druckraum 48 einzustellen, umfasst die Befüllvorrichtung 2 ein Druckaufbaumittel 50. Ferner umfasst die Befüllvorrichtung 2 ein Fluidzuführmittel 52, durch das ein Fluid, insbesondere ein Edelgas, dem Druckraum 48 der Druckkammer 42 zuführbar ist. Um die Batteriegehäuse 12 befüllen zu können, umfasst die Befüllvorrichtung 2 bei dem in Figur 2 gezeigten Ausführungsbeispiel eine Dosiereinheit 54. Durch die Dosiereinheit 54 ist Fluid zum Befüllen des Batteriegehäuses 12 beförderbar und mindestens einem Befüllkörper 24 Fluid zum Befüllen eines Batteriegehäuses 12 zuführbar. Zum Relativbewegen von Dosiereinheit 54 zum Halterahmen 4 umfasst die Befüllvorrichtung 2 ein Fördermittel 56. Dies ist bei dem in Figur 2 dargestellten Ausführungsbeispiel durch einen Linearantrieb gebildet.

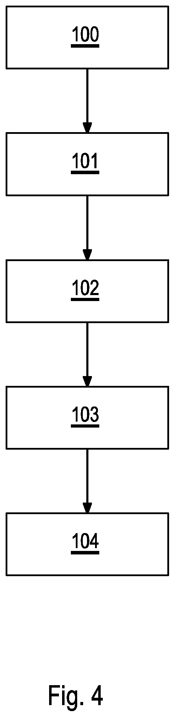

Figur 4 zeigt ein schematisches Ablaufdiagramm eines erfindungsgemäßen Verfahrens. Unter Zuhilfenahme der Darstellungen in den Figuren 1 bis 3 wird das Verfahren nachfolgend erläutert:

In einem ersten Schritt 100 wird mindestens ein Batteriegehäuse 12 in einer Aufnahme 32 einer Grundplatte 6 eines Halterahmens 4 der Befüllvorrichtung 2 angeordnet. In einem hieran anschließenden Schritt 101 wird ein Befüllkörper 24 an der Tragstruktur 8 angeordnet. Die Tragstruktur 8 wird im gleichen Schritt oder einem hieran anschließenden Zwischenschritt an der Grundplatte 6 in einer Befüllanordnung derart angeordnet, dass die Tragstruktur 8 zur Grundplatte 6 beabstandet ist. Ferner erfolgt das Anordnen der Tragstruktur 8 bezüglich der Grundplatte 6 derart, dass mindestens ein Befüllkörper 24 mittels seines Koppelabschnitts 26 mit dem Befüllabschnitt 18 eines Batteriegehäuses 12 zum Herstellen einer Fluidverbindung entlang der Fügerichtung 28 koppelbar ist.

In einem hieran anschließenden Schritt 102 wird das System aus Halterahmen 4, mindestens einem Batteriegehäuse 12, mindestens einem Befüllkörper 24 auf einer Arbeitsplatte 44 einer Druckkammer 42 der Befüllvorrichtung 2 angeordnet und ein Glockenkörper 46 der Befüllvorrichtung 2 auf die Arbeitsplatte 44 abgesenkt.

In einem hieran anschließenden Schritt 103 wird im Druckraum 48 der Druckkammer 42 ein Unterdruck durch ein Druckaufbaumittel 50 erzeugt und/oder Fluid, insbesondere Edelgas, in den Druckraum 48 durch mindestens ein Fluidzuführmittel 52 gefördert.

Hieran anschließend erfolgt in einem Schritt 104 ein Befüllen des mindestens einen Befüllkörpers 24 mit einem Fluid, insbesondere Elektrolyt, durch eine Dosiereinheit 54. Aufgrund der Tatsache, dass der Befüllkörper 24 in Fluidverbindung mit dem Batteriegehäuse 12 steht, fließt das Fluid, das in dem Befüllkörper 24 gefüllt wurde, in das Batteriegehäuse 12. Wenn in dem Batteriegehäuse 12 ein Wickelkörper 22 angeordnet ist, saugt sich dieser mit fortschreitender Zeitdauer zunehmend voll. Hierdurch wird Volumen im Batteriegehäuse 12 freigegeben, wodurch das restliche, sich im Befüllkörper 24 noch befindliche Fluid, in das Batteriegehäuse 12 nachfließt, bis der Wickelkörper 22 vollständig gesättigt ist und sämtliches Fluid aus dem Befüllkörper 24 in das Batteriegehäuse 12 geflossen ist.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein, innerhalb des Umfangs der beiliegenden Ansprüche.

### Bezugszeichenliste

- 2: Befüllvorrichtung
- 4: Halterahmen
- 6: Grundplatte
- 8: Tragstruktur
- 10: Stützmittel
- 12: Batteriegehäuse
- 14: Aufnahme
- 16: Aussparung
- 18: Befüllabschnitt
- 20: Hohlraum
- 22: Wickelkörper
- 24: Befüllkörper
- 26: Koppelabschnitt
- 28: Fügerichtung
- 30: Spannmittel
- 34: Dichtmittel
- 36: Festlegeeinheit
- 38: Vorsprung
- 40: Halter
- 42: Druckkammer
- 44: Arbeitsplatte
- 46: Glockenkörper
- 48: Druckraum
- 50: Druckaufbaumittel
- 52: Fluidzuführmittel
- 54: Dosiereinheit
- 56: Fördermittel

- 100-104: Verfahrensschritte

## Patentansprüche

1. Befüllvorrichtung (2) zum Befüllen einer Batterie, mit mindestens einem Halterahmen (4), der mindestens eine Grundplatte (6), der mindestens eine in oder an der Grundplatte (6) angeordnete Aufnahme (14) und der mindestens eine zur Grundplatte (6) beabstandete Tragstruktur (8) aufweist, mit mindestens einem Batteriegehäuse (12), das in oder an mindestens einer der mindestens einen Aufnahme (14) anordenbar oder angeordnet ist und das mindestens einen Befüllabschnitt (18) umfasst, durch den ein Fluid, insbesondere ein Elektrolyt, einem Hohlraum (20) des Batteriegehäuses (12) zuführbar ist, mit mindestens einem hülsenartigen Befüllkörper (24), dem das Fluid zum Befüllen des Batteriegehäuses (12) zuführbar ist und der zumindest beim Anordnen in einer Befüllanordnung mittels eines Koppelabschnitts (26) mit dem Befüllabschnitt (18) des Batteriegehäuses (12) zum Herstellen einer Fluidverbindung entlang einer Fügerichtung (28) koppelbar ist und mit mindestens einem Spannmittel (30), durch das das Batteriegehäuse (12) und der Befüllkörper (24) in Richtung aufeinander zu spannbar sind, wobei mindestens eines des mindestens einen Spannmittels (30) in der oder an der Aufnahme (14) der Grundplatte (6) angeordnet ist, **gekennzeichnet durch** mindestens ein Stützmittel (10), das lösbar oder unlösbar zwischen Grundplatte (6) und Tragstruktur (8) anordenbar ist, das gitterartig zur Grundplatte (6) beabstandet und parallel zu dieser verlaufend angeordnet ist und durch das das Batteriegehäuse (12) zumindest gegen ein Bewegen quer zur Fügerichtung (28) abstützbar ist.

2. Befüllvorrichtung (2) nach Anspruch 1, **dadurch gekennzeichnet, dass** mindestens eine der mindestens einen Aufnahme (14) durch eine Aussparung (16) in der Grundplatte (6) gebildet ist, die insbesondere einen Querschnitt umfasst, der korrespondierend, insbesondere komplementär, zum Querschnitt des Batteriegehäuses (12) ausgebildet ist, und/oder dass mindestens eines des mindestens einen Spannmittels (30) zwischen der Grundplatte (6) und dem Batteriegehäuse (12) abgestützt ist.

3. Befüllvorrichtung (2) nach Anspruch 1 oder 2, **gekennzeichnet durch** mindestens ein Dichtmittel (34), das zumindest in der Befüllanordnung zwischen Befüllabschnitt (18) des Batteriegehäuses (12) und Koppelabschnitt (26) des Befüllkörpers (24) anordenbar oder angeordnet ist.

4. Befüllvorrichtung (2) nach Anspruch 3, **dadurch gekennzeichnet, dass** der Befüllabschnitt (18) des Batteriegehäuses (12) und der Koppelabschnitt (26) des Befüllkörpers (24) in der Befüllanordnung bezüglich der Fügerichtung (28) stirnseitig aneinander anliegen, wobei mindestens eines des mindestens einen Dichtmittels (34) zwischen den Stirnseiten des Befüllabschnitts (18) des Batteriegehäuses (12) und des Koppelabschnitts (26) des Befüllkörpers (24) angeordnet ist und/oder dass der Befüllabschnitt (18) des Batteriegehäuses (12) und der Koppelabschnitt (26) des Befüllkörpers (24) in der Befüllanordnung bezüglich der Fügerichtung (28) umfangsseitig aneinander anliegen, wobei mindestens eines des mindestens einen Dichtmittels (34) zwischen den Umfangsseiten des Befüllabschnitts (18) des Batteriegehäuses (12) und des Koppelabschnitts (26) des Befüllkörpers (24) angeordnet ist

5. Befüllvorrichtung (2) nach mindestens einem der vorhergehenden Ansprüche, **gekennzeichnet durch** mindestens einen Wickelkörper (22), der im Hohlraum (20) des Batteriegehäuses (12) anordenbar oder angeordnet ist und der zumindest teilweise mit dem Fluid durchtränkbar ist.

6. Befüllvorrichtung (2) nach mindestens einem der vorhergehenden Ansprüche, **gekennzeichnet durch** mindestens eine Festlegeeinheit (36), durch die der Befüllkörper (24) in der Befüllanordnung relativ zur Tragstruktur (8) unbeweglich und/oder ortsfest festlegbar ist.

7. Befüllvorrichtung (2) nach Anspruch 6, **dadurch gekennzeichnet, dass** die Festlegeeinheit (36) mindestens einen quer oder schräg zur Fügerichtung (28) erstreckten, insbesondere umlaufenden, Vorsprung (38) an der Mantelfläche des Befüllkörpers (24) und/oder mindestens einen hakenförmigen Halter (40) an der Tragstruktur (8) umfasst, wobei Vorsprung (38) und Halter (40) bezüglich der Fügerichtung (28) einen Hintergriff bilden.

8. Befüllvorrichtung (2) nach mindestens einem der vorhergehenden Ansprüche, **dadurch gekennzeichnet, dass** die Tragstruktur (8) in Fügerichtung (28) an der Grundplatte (6) anordenbar und lösbar an der Grundplatte (6) festlegbar ist.

9. Befüllvorrichtung (2) nach mindestens einem der vorhergehenden Ansprüche, **dadurch gekennzeichnet, dass** der Halterahmen (4) eine Grundplatte (6) und eine Mehrzahl von an der Grundplatte (6) an geordnete Aufnahmen (32) für eine Mehrzahl von Batteriegehäusen (12), aufweist, und/oder dass an der Tragstruktur (8) eine Mehrzahl von Befüllkörpern durch eine Mehrzahl von Festlegeeinheiten (36) festlegbar ist.

10. Befüllvorrichtung (2) nach mindestens einem der vorhergehenden Ansprüche, **gekennzeichnet, durch** mindestens eine Druckkammer (42), die einen Druckraum (48) umfasst, in dem der Halterahmen (4) anordenbar ist und in dem bezüglich einer Umgebung außerhalb der Druckkammer (42) ein Über- oder Unterdruck einstellbar ist.

11. Befüllvorrichtung (2) nach Anspruch 10, **dadurch gekennzeichnet, dass** die Druckkammer (42) eine Arbeitsplatte (44) und einen relativ zur Arbeitsplatte (44) bewegbaren Glockenkörper (46) umfasst, wobei der Glockenkörper (46) von einer Freigabeposition, in der der zur Arbeitsplatte (44) beabstandet ist, in eine Arbeitsposition überführbar ist, in der der Glockenkörper (46) an der Arbeitsplatte (44) flächenhaft anliegt und der Druckraum (48) abschnittsweise oder in Gänze durch Arbeitsplatte (44) und Glockenkörper (46) umgeben ist.

12. Befüllvorrichtung (2) nach Anspruch 10 oder 11, **gekennzeichnet durch** mindestens ein Druckaufbaumittel (50), durch das ein Druck, insbesondere Überdruck oder Unterdruck, in dem Druckraum (48) der Druckkammer (42) einstellbar ist und/oder durch mindestens ein Fluidzuführmittel (52), durch das ein Fluid, insbesondere ein Edelgas, dem Druckraum (48) der Druckkammer (42) zuführbar ist.

13. Befüllvorrichtung (2) nach mindestens einem der vorhergehenden Ansprüche, **gekennzeichnet, durch** mindestens eine Dosiereinheit (54), in der das Fluid zum Befüllen des Batteriegehäuses (12) förderbar ist und durch die mindestens einem Befüllkörper (24) Fluid zum Befüllen eines Batteriegehäuses (12) zuführbar ist und/oder durch mindestens ein in der Druckammer (42) angeordnetes Fördermittel (56), durch das der Halterahmen (4) relativ zur Dosiereinheit (54) oder die Dosiereinheit (54) relativ zum Halterahmen (4) bewegbar ist.

14. Verfahren zum Befüllen einer Batterie, mittels eine Befüllvorrichtung (2) nach einem der Ansprüche 1 bis 13, mit den Schritten:
a. Anordnen mindestens eines Batteriegehäuses (12) in einer Aufnahme (14) einer Grundplatte (6) eines Halterahmens (4) der Befüllvorrichtung (2);
b. Anordnen mindestens eines Befüllkörpers (24) an einer Tragstruktur (8) des Halterahmens (4) der Befüllvorrichtung (2) und beabstandetes Anordnen der Tragstruktur (8) an der Grundplatte (6) in einer Befüllanordnung, derart, dass mindestens einer des mindestens einen Befüllkörpers (24) mittels eines Koppelabschnitts (26) mit einem Befüllabschnitt (18) mindestens eines Batteriegehäuses (12) zum Herstellen einer Fluidverbindung entlang einer Fügerichtung (28) koppelbar ist;
c. Anordnen des Systems aus Halterahmen (4), mindestens einem Batteriegehäuses (12) und mindestens einem Befüllkörpers (24) auf einer Arbeitsplatte (44) einer Druckkammer (42) der Befüllvorrichtung (2) und Absenken eines Glockenkörpers (46) der Befüllvorrichtung (2) auf die Arbeitsplatte (44) zum Bilden eines Druckraums (48);
d. Erzeugen eines Unterdrucks im Druckraum (48) durch mindestens ein Druckaufbaumittel (50) und/oder Zuführen eines Fluids, insbesondere Edelgas, in den Druckraum (48) durch mindestens ein Fluidzuführmittel (52);
e. Befüllen des Befüllkörpers (24) mit einem Fluid, insbesondere Elektrolyt, durch eine Dosiereinheit (54).

## Claims

1. Filling device (2) for filling a battery, with at least one holder frame (4), which has at least one base plate (6), which has at least one receptacle (14) arranged in or on the base plate (6) and which has at least one support structure (8) spaced apart from the base plate (6), with at least one battery housing (12) which can be arranged or is arranged in or on at least one of the at least one receptacles (14) and which comprises at least one filling section (18) through which a fluid, in particular electrolytes, can be supplied to a cavity (20) of the battery housing (12), having at least one sleeve-like filling body (24) to which the fluid for filling the battery housing (12) can be conveyed and which, at least when arranged in a filling arrangement, can be coupled by means of a coupling section (26) to the filling section (18) of the battery housing (12) in order to produce a fluid connection along a joining direction (28) and having at least one clamping device (30) by which the battery housing (12) and the filling body (24) can be clamped towards one another, wherein at least one of the clamping devices (30) is arranged in or on the receptacle (14) of the base plate (6) **characterised by** at least one support means (10) which can be arranged detachably or non-detachably between the base plate (6) and the support structure (8), which is arranged at a distance from the base plate (6) in a grid-like manner and running parallel thereto and by means of which the battery housing (12) can be supported at least against movement transversely to the joining direction (28).

2. Filling device (2) according to Claim 1, **characterised in that** at least one of the at least one receptacles (14) is formed by a recess (16) in the base plate (6), which in particular comprises a cross-section which is designed to correspond, in particular to complement, the cross-section of the battery housing (12), and/or **in that** at least one of the at least one clamping devices (30) is supported between the base plate (6) and the battery housing (12).

3. Filling device (2) according to Claim 1 or 2, **characterised by** at least one seal (34) which can be arranged or is arranged at least in the filling arrangement between the filling section (18) of the battery housing (12) and the coupling section (26) of the filling body (24).

4. Filling device (2) according to Claim 3, **characterised in that** the filling section (18) of the battery housing (12) and the coupling section (26) of the filling body (24) in the filling arrangement bear against each other on the end face with respect to the joining direction (28), wherein at least one of the at least one seals (34) is arranged between the end faces of the filling section (18) of the battery housing (12) and the coupling section (26) of the filling body (24) and/or that the filling section (18) of the battery housing (12) and the coupling section (26) of the filling body (24) in the filling arrangement with respect to the joining direction (28) rests against one another on the peripheral side, wherein at least one of the at least one seals (34) is arranged between the peripheral sides of the filling section (18) of the battery housing (12) and the coupling section (26) of the filling body (24).

5. Filling device (2) according to at least one of the preceding claims, **characterised by** at least one winding body (22) which can be arranged or is arranged in the cavity (20) of the battery housing (12) and which can be at least partially impregnated with the fluid.

6. Filling device (2) according to at least one of the preceding claims, **characterised by** at least one fixing unit (36) by which the filling body (24) can be immovably and/or determinably fixed in the filling arrangement relative to the support structure (8).

7. Filling device (2) according to Claim 6, **characterised in that** the fixing unit (36) has at least one, in particular circumferential, projection (38) extending transversely or at an angle to the joining direction (28) on the lateral surface of the filling body (24) and/or at least one hook-shaped holder (40) on the support structure (8), wherein the projection (38) and the holder (40) form a rear grip with regard to the joining direction (28).

8. Filling device (2) according to at least one of the preceding claims, **characterised in that** the support structure (8) can be arranged on the base plate (6) in the joining direction (28) and can be detachably fixed to the base plate (6).

9. Filling device (2) according to at least one of the preceding claims, **characterised in that** the holder frame (4) has a base plate (6) and a plurality of receptacles (32) arranged on the base plate (6) for a plurality of battery housings (12), and/or **in that** a plurality of filling bodies can be fixed to the support structure (8) by a plurality of fixing units (36).

10. Filling device (2) according to at least one of the preceding claims, **characterised by** at least one pressure chamber (42) which comprises a pressure space (48) in which the holder frame (4) can be arranged and in which an overpressure or underpressure can be set with regard to an environment outside the pressure chamber (42).

11. Filling device (2) according to Claim 10, **characterised in that** the pressure chamber (42) comprises a work surface (44) and a bell body (46) which can be moved relative to the work surface (44), wherein the bell body (46) can be transferred from a release position, in which it is spaced apart from the work surface (44), into a working position, in which the bell body (46) lies flat against the work surface (44) and the pressure space (48) is surrounded in sections or in its entirety by the work surface (44) and the bell body (46).

12. Filling device (2) according to Claim 10 or 11, **characterised by** at least one pressure build-up means (50), by means of which a pressure, in particular overpressure or underpressure, can be set in the pressure space (48) of the pressure chamber (42) and/or by at least one fluid supply means (52), by means of which a fluid, in particular a noble gas, can be supplied to the pressure space (48) of the pressure chamber (42).

13. Filling device (2) according to at least one of the preceding claims, **characterised by** at least one dosing unit (54), in which the fluid for filling the battery housing (12) can be conveyed and through which fluid for filling a battery housing (12) can be supplied to at least one filling body (24) and/or by at least one conveyor (56) which is arranged in the pressure chamber (42) and through which the holder frame (4) can be moved relative to the dosing unit (54) or the dosing unit (54) can be moved relative to the holder frame (4).

14. Method for filling a battery, using a filling device (2) according to one of Claims 1 to 13, with the steps:
a. Arranging at least one battery housing (12) in a receptacle (14) of a base plate (6) of a holder frame (4) of the filling device (2);
b. Arrangement of at least one filling body (24) on a support structure (8) of the holder frame (4) of the filling device (2) and spaced arrangement of the support structure (8) on the base plate (6) in a filling arrangement, in such a way that at least one of the at least one filling bodies (24) can be coupled by means of a coupling section (26) to a filling section (18) of at least one battery housing (12) for producing a fluid connection along a joining direction (28);
c. Arranging the system consisting of the holder frame (4), at least one battery housing (12) and at least one filling body (24) on a work surface (44) of a pressure chamber (42) of the filling device (2) and lowering a bell body (46) of the filling device (2) on the work surface (44) to form a pressure space (48);
d. Generating a negative pressure in the pressure space (48) by at least one pressure build-up means (50) and/or supplying a fluid, in particular noble gas, into the pressure space (48) by at least one fluid supply means (52);
e. Filling the filling body (24) with a fluid, in particular electrolytes, by a dosing unit (54).

## Revendications

1. Dispositif de remplissage (2) pour remplir une batterie, avec au moins un cadre de retenue (4), qui comporte au moins une plaque de fond (6),qui comporte au moins au moins un logement (14) disposé dans ou sur la plaque de fond (6) et qui comporte au moins une structure porteuse espacée (8) de la plaque de fond (6), avec au moins un boîtier de batterie (12) qui peut être disposé ou est disposé dans tout au moins un logement (14) et qui comprend au moins une section de remplissage (18), permettant d'amener un fluide, notamment un électrolyte, à une cavité (20) du boîtier de batterie (12), avec au moins un corps de remplissage tubulaire (24) auquel le fluide de remplissage du boîtier de batterie (12) peut être amené et qui, au moins lorsqu'il est disposé dans un dispositif de remplissage au moyen d'une section de couplage (26), peut être couplé avec la section de remplissage (18) du boîtier de batterie (12) pour établir une liaison fluidique le long d'un sens d'assemblage (28) et comportant au moins un système de serrage (30) au moyen duquel le boîtier de batterie (12) et le corps de remplissage (24) peuvent être serrés l'un vers l'autre, selon lequel tout au moins un système de serrage (30) est disposé dans ou sur le logement (14) de la plaque de fond (6), **caractérisé par** au moins un moyen de support (10) qui peut être disposé de manière amovible ou non entre la plaque de fond (6) et la structure porteuse (8), qui est espacé de la plaque de fond (6) en forme de grille et s'étend parallèlement à celle-ci, et au moyen duquel le boîtier de batterie (12) peut être supporté au moins contre le mouvement transversal au sens d'assemblage (28).

2. Dispositif de remplissage (2) selon la revendication 1, **caractérisé en ce que** tout au moins un logement (14) est formé par une encoche (16) dans la plaque de fond (6), qui comprend notamment une section transversale, qui est conçue pour correspondre à, ou compléter la section transversale du boîtier de batterie (12), et/ou **en ce que** tout au moins un système de serrage (30) est soutenu entre la plaque de fond (6) et le boîtier de batterie (12).

3. Dispositif de remplissage (2) selon la revendication 1 ou 2, **caractérisé par** au moins un mastic (34) qui peut être disposé ou est disposé au moins dans l'agencement pour le remplissage entre la section de remplissage (18) du boîtier de batterie (12) et la section de couplage (26) du corps de remplissage (24).

4. Dispositif de remplissage (2) selon la revendication 3, **caractérisé en ce que** la section de remplissage (18) du boîtier de batterie (12) et la section de couplage (26) du corps de remplissage (24) sont en contact entre elles dans l'agencement pour le remplissage par rapport au sens d'assemblage (28), selon lequel tout au moins un mastic (34) est disposé entre les faces avant de la section de remplissage (18) du boîtier de batterie (12) et de la section de couplage ( 26) du corps de remplissage (24) et/ou que la section de remplissage (18) du boîtier de batterie (12) et la section de couplage (26) du corps de remplissage (24) sont en contact entre elles dans l'agencement pour le remplissage par rapport au sens d'assemblage (28), selon lequel tout au moins un mastic (34) est disposé entre les côtés périphériques de la section de remplissage (18) du boîtier de batterie (12) et la section de couplage (26) du corps de remplissage (24)

5. Dispositif de remplissage (2) selon au moins une des revendications précédentes, **caractérisé par** au moins un enrouleur (22) qui peut être disposé ou est disposé dans la cavité (20) du boîtier de batterie (12), et qui peut être imprégné au moins en partie avec le fluide.

6. Dispositif de remplissage (2) selon au moins une des revendications précédentes, **caractérisé par** au moins une unité de serrage (36) permettant de fixer le corps de remplissage (24) de manière immobile et/ou fixe dans l'agencement pour le remplissage par rapport à la structure porteuse (8).

7. Dispositif de remplissage (2) selon la revendication 6, **caractérisé en ce que** l'unité de serrage (36) présente au moins une saillie (38), notamment circonférentielle, s'étendant transversalement ou en biais par rapport au sens d'assemblage (28) sur la surface enveloppante du corps de remplissage (24) et/ou au moins un support en forme de crochet (40) sur la structure porteuse (8), selon lequel la saillie (38) et le support (40) forment une prise arrière par rapport au sens d'assemblage (28 ).

8. Dispositif de remplissage (2) selon au moins une des revendications précédentes, **caractérisé en ce que** la structure porteuse (8) peut être disposée dans le sens d'assemblage (28) sur la plaque de fond (6) et être fixée sur la plaque de fond (6) tout en restant amovible.

9. Dispositif de remplissage (2) selon au moins l'une des revendications précédentes, **caractérisé en ce que** le cadre de retenue (4) présente une plaque de fond (6) et plusieurs logements (32) disposés sur la plaque de base (6) pour plusieurs boîtiers de batterie (12), et/ou que plusieurs corps de remplissage peuvent être fixés à la structure porteuse (8) par plusieurs unités de serrage (36).

10. Dispositif de remplissage (2) selon au moins l'une des revendications précédentes, **caractérisé par** au moins une chambre de compression (42) qui comprend une chambre de pression (48) dans laquelle le cadre de retenue (4) peut être disposé, et dans laquelle, par rapport à un environnement hors de la chambre de compression (42), une surpression ou une dépression peut être réglée.

11. Dispositif de remplissage (2) selon la revendication 10, **caractérisé en ce que** la chambre de compression (42) comprend un plan de travail (44) et un corps de cloche (46) qui peut être déplacé par rapport au plan de travail (44), selon lequel le corps de cloche ( 46) peut passer d'une position de libération, dans laquelle il est écarté du plan de travail (44), à une position de travail dans laquelle le corps de cloche (46) s'étend sur la surface du plan de travail (44) et la chambre de pression (48 ) est partiellement ou totalement entourée par le plan de travail (44) et le corps de cloche (46).

12. Dispositif de remplissage (2) selon la revendication 10 ou 11, **caractérisé par** au moins un accumulateur de pression (50) au moyen duquel une pression, notamment une surpression ou une dépression, peut être réglée dans la chambre de pression (48) de la chambre de compression (42) et/ou par au moins un dispositif d'amenée de fluide (52) au moyen duquel un fluide, notamment un gaz inerte, peut être amené à la chambre de pression (48) de la chambre de compression (42).

13. Dispositif de remplissage (2) selon au moins une des revendications précédente, **caractérisé par** au moins un doseur (54), dans lequel le liquide de remplissage du boîtier de batterie (12) peut être refoulé, et par au moins un corps de remplissage (24) qui permet d'amener le fluide de remplissage d'un boîtier de batterie (12) et par au moins un moyen de transport (56) disposé dans la chambre de compression (42), permettant de déplacer le cadre de retenue (4) par rapport au doseur (54) ou le doseur (54) par rapport au cadre de retenue(4).

14. Procédé de remplissage d'une batterie, au moyen d'un dispositif de remplissage (2) selon l'une des revendications 1 à 13, comprenant les étapes :
a. Disposition d'au moins un boîtier de batterie (12) dans un logement (14) d'une plaque de fond (6) d'un cadre de retenue (4) du dispositif de remplissage (2) ;
b. Disposition d'au moins un corps de remplissage (24) sur une structure porteuse (8) du cadre de retenue (4) du dispositif de remplissage (2) et disposition espacée de la structure porteuse (8) sur la plaque de fond (6) dans un agencement pour le remplissage, de sorte que tout au moins un corps de remplissage (24) puisse être couplée au moyen d'une section de couplage (26) avec une section de remplissage (18) d'au moins un boîtier de batterie (12) pour établir une liaison fluidique le long d'un sens d'assemblage (28);
c. Disposition du système composé du cadre de retenue (4), au moins d'un boîtier de batterie (12) et au moins d'un corps de remplissage (24) sur le plan de travail (44) d'une chambre de compression (42) du dispositif de remplissage (2) et abaissement d'un corps de cloche (46) du dispositif de remplissage (2) sur le plan de travail (44) pour former une chambre de pression (48) ;
d. Dépression générée dans la chambre de pression (48) par au moins un accumulateur de pression (50) et/ou une amenée d'une fluide, notamment le gaz inerte, dans la chambre de pression (48) par au moins un dispositif d'amenée de fluide (52) ;
e. Remplissage du corps de remplissage (24) avec un fluide, notamment l'électrolyte, par un doseur (54).
